# EUROPEAN PATENT SPECIFICATION

(11) **EP 2 366 242 B1**
(45) Date of publication and mention of the grant of the patent: **28.03.2018**
(21) Application number: 09789819.1
(22) Date of filing: 15.06.2009
(51) Int. Cl.: H04L 29/08

(54) **METHOD AND SYSTEM FOR SYNCHRONIZING INFORMATION**
VERFAHREN UND SYSTEM ZUM SYNCHRONISIEREN VON INFORMATIONEN
PROCÉDÉ ET SYSTÈME POUR SYNCHRONISER DES INFORMATIONS

(30) Priority: 15.12.2008 US 334828
(43) Date of publication of application: 21.09.2011
(73) Proprietor: Sony Mobile Communications Inc., Shinagawa-ku, Tokyo 140-0002 (JP)
(72) Inventor: ZAK, Robert, A., Cary NC 27513 (US)
(74) Representative: Zacco Sweden AB
(86) International application number: PCT/US2009/047345
(87) International publication number: WO 2010/071690

(56) References cited:
- WO-A-03/032569
- US-A1- 2004 044 920
- US-A1- 2008 168 292

## Description

### TECHNICAL FIELD OF THE INVENTION

The present invention relates generally to electronic devices, such as portable wireless devices for engaging in voice communications and other communications. More particularly, the invention relates to a method and system for electronic devices to exchange and/or synchronize information without loss of information.

### DESCRIPTION OF THE RELATED ART

Mobile and/or wireless electronic devices are becoming increasingly popular. For example, digital cameras, mobile telephones and portable media players are now in wide-spread use. In addition, the features associated with certain types of electronic devices have become increasingly diverse. To name a few examples, many electronic devices have cameras, text messaging capability, Internet browsing functionality, electronic mail capability, video playback capability, audio playback capability, image display capability and hands-free headset interfaces.

It is often desirable to have wireless devices communicate with each other. Wireless devices generally allow transfer and/or synchronization of information (e.g., E-mail messages, calendar information, appointments, contact information, etc.) with databases and/or computer applications stored on personal computers, personal digital assistants (PDAs) network servers, and other electronic devices. For example, a popular E-mail application (Microsoft Outlook) allows synchronizing and/or downloading calendar appointments between a personal computer executing the E-mail application to a mobile telephone or other portable device through a wired or wireless communication protocol using ActiveSync protocols.

### SUMMARY

One drawback with transferring information and/or synchronizing information between electronic devices is that the size of the fields that contain the information may vary widely among devices. For example, the "Description" field for calendar appointments allows only a limited number of characters of text. Therefore, when a transferring device has a larger description than allowed by the receiving device, the receiving device generally truncates the received data. The truncation of the received data results in data loss associated with the transfer and/or synchronization of information. This information may be an essential portion of the transferred information. For example, if the information to be transferred contained a teleconference access code at the end of a long message in the Description field, such information may be truncated upon transfer and/or synchronization. Such a truncation would prevent the user of the receiving device from receiving the access code, which would make it difficult for the user to participate in the telephone conference call.

The present invention relates to a method and system for automatically detecting, extracting and storing information deemed important by the user during the transfer and/or synchronization of such information.

One aspect of the present invention relates to a method for synchronizing information between electronic devices, the method including: establishing a communication link between a mobile device and an electronic device; detecting a synchronization condition by the mobile device, wherein the synchronization condition is a transfer of data from the electronic device to the mobile device and the data includes a plurality of fields; comparing the data to be transferred to a corresponding field on the mobile device; and parsing the one or more fields associated with the data to be transferred from the electronic device to the mobile device if data from at least one of the fields exceeds a corresponding maximum data size field associated with the mobile device, wherein the data is parsed to preserve data having a predefined format.

Another aspect of the invention relates to the step of parsing including applying one or more rules to the data to be transferred from the electronic device to the mobile device.

Another aspect of the invention relates to the one or more rules corresponding to a group consisting of at least one selected from the group of a telephone number, a key number, an identification number, a name, a location, or a time.

Another aspect of the invention relates to the rules corresponding to a predefined number format.

Another aspect of the invention relates to one or more of the rules being defined by the user.

Another aspect of the invention relates to the step of parsing including transferring a first portion of the data to be transferred based upon location of the data in the data to be transferred and transferring a second portion of the data based on the data in the data to be transferred that corresponds to the predefined format.

Another aspect of the invention relates to the second portion of the data transferred is limited to a percentage of the corresponding maximum data size of field.

Another aspect of the invention relates to a size of the first portion of the data is dynamically allocated based on the data to be transferred that corresponds to the predefined format.

Another aspect of the invention relates to the mobile device or the electronic device initiating the communication link.

Another aspect of the invention relates to the communication link being a wireless communication link.

Another aspect of the invention relates to the mobile device determining the synchronization condition upon establishing the communication link.

Another aspect of the invention relates to the electronic device determining the synchronization condition upon establishing the communication link.

Another aspect of the invention relates to the data being stored on the mobile device.

One aspect of the invention relates to a mobile device including: a memory for storing data received from an electronic device, wherein the data includes one or more data fields having a limited size; a processor coupled to the memory wherein when the mobile is communicatively coupled to the electronic device, the processor is configured to: detecting a synchronization condition by the mobile device, wherein the synchronization condition is a transfer of data having a plurality of fields from the electronic device to the mobile device; comparing the data to be transferred from the electronic device to the mobile device to a corresponding data field stored in the memory of the mobile device; and parsing the one or more fields associated with the data to be transferred from the electronic device to the mobile device if data from at least one of the fields exceeds the corresponding limited size data field associated with the mobile device, wherein the data is parsed to preserve data having a predefined format.

Another aspect of the invention relates to the mobile device being a mobile telephone.

Another aspect of the invention relates to the processor parsing the one or more fields by applying one or more rules to the data to be transferred from the electronic device to the mobile device.

Another aspect of the invention relates to the one or more rules correspond to a group consisting of at least one selected from the group of a telephone number, a key number, an identification number, a name, a location, or a time.

Another aspect of the invention relates to the rules corresponding to a predefined number format.

Another aspect of the invention relates to one or more of the rules being defined by the user.

Another aspect of the invention relates to the step of parsing including storing in the memory a first portion of the data to be transferred based upon location of the data in the data to be transferred and transferring a second portion of the data based on the data in the data to be transferred that corresponds to the predefined format.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the claims appended hereto.

Features that are described and/or illustrated with respect to one embodiment may be used in the same way or in a similar way in one or more other embodiments and/or in combination with or instead of the features of the other embodiments. It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

Figure 1 is a schematic view of an exemplary system in accordance with aspects of the present invention.
Figure 2 is a schematic view of a mobile device in accordance with aspects of the present invention.
Figure 3 is a schematic block diagram of the mobile device of Figure 2 in accordance with aspects of the present invention.
Figure 4 is a schematic block diagram of an exemplary collection of information in accordance with aspects of the present invention.
Figure 5 is an exemplary method in accordance with aspects of the present invention.
Figure 6A and 6B are exemplary schematic diagrams of data elements in accordance with aspects of the present invention.

### DETAILED DESCRIPTION OF EMBODIMENTS

The present invention will now be described with reference to the drawings, wherein like reference numerals are used to refer to like elements throughout. It will be understood that the figures are not necessarily to scale.

The term "electronic device" includes any type of device that is capable of exchanging data with another device. Exemplary electronic devices include mobile telephones, pagers, communicators, electronic organizers, personal digital assistants (PDAs), smartphones, portable communication devices, personal computers, servers and the like.

In the present application, the invention is described primarily in the context of a mobile telephone. However, it will be appreciated that the invention is not intended to be limited to a mobile telephone and can be any type of appropriate electronic device.

Before describing in detail embodiments that are in accordance with aspect of the present disclosure, it should be observed that the embodiments reside primarily in combinations of method steps and apparatus components related to exchanging and/or synchronizing information between electronic devices. Accordingly, the apparatus components and method steps have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

In this disclosure, relational terms such as first and second, top and bottom, and the like may be used solely to distinguish one entity or action from another entity or action without necessarily requiring or implying any actual such relationship or order between such entities or actions.

Aspects of the present invention relate to exchanging, transferring and/or synchronizing information between electronic devices. As used herein the terms "exchanging", "transferring" and "synchronizing" may be used interchangeably and refer to merging data from two or more copies of a database together by preserving rather than overwriting the latest changes made in any copy.

Aspects of the present invention relate to a device and method for synchronizing information between electronic devices. In general, a communication link is established between a mobile device and an electronic device. A synchronization condition is detected by the mobile device and/or the electronic device. The synchronization condition generally relates to a transfer of data from the electronic device to the mobile device, wherein the data includes a plurality of fields. The mobile device compares the data to be transferred to a corresponding field on the mobile device. For example, the data to be transferred may originate from the "Description Field" of a calendar application stored in the electronic device. The mobile device may store the data in a "Description Field" for the calendar application on the mobile device or another field if the mobile does have a "Description Field". If the corresponding field on the mobile device has a smaller size than one or more of the fields to be transferred from the electronic device to the mobile device, such fields may be parsed to preserve data having a predefined format. The predefined format may be any format desired to be preserved by the user. Exemplary predefined formats include telephone numbers, key numbers, access numbers, identification numbers, names, locations, dates and times, alphanumeric characters near an asterisk (*) and/or a hash symbol (#), etc.

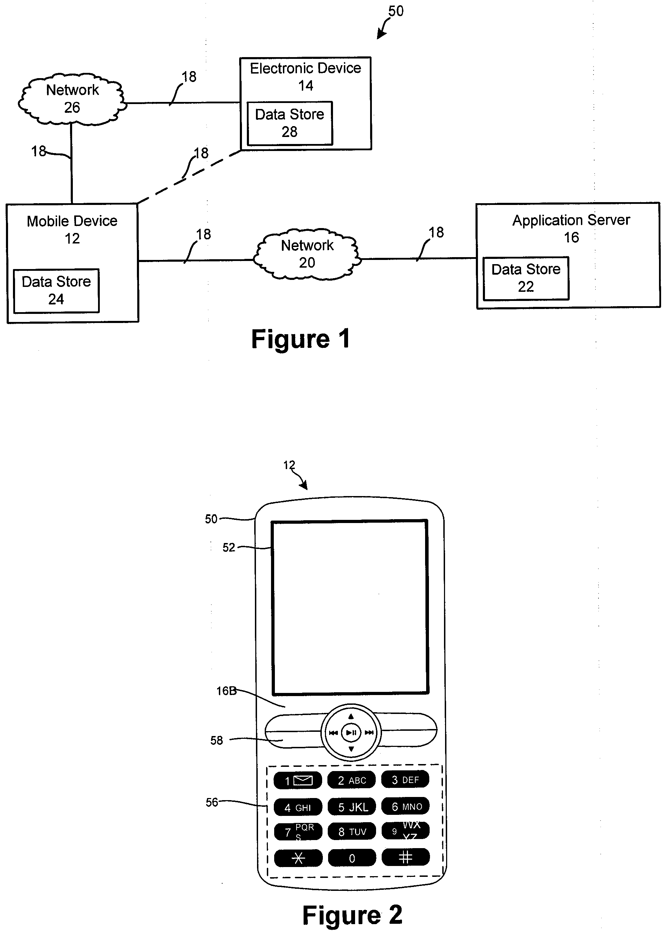

Figure 1 is a schematic diagram illustrating an exemplary system 10 in accordance with aspects of the present invention. The system 10 includes a mobile device 12 coupled to an electronic device (e.g., electronic device 14, application server 16) through one or more communication links 18.

The mobile device 12 may be any type of mobile device. Exemplary mobile devices include mobile telephones, pagers, communicators, electronic organizers, personal digital assistants (PDAs), smartphones, portable communication devices and the like. The electronic device 14 may be any type of electronic device that is capable of exchanging data with another device.

Communication is established between the mobile device 12 and the electronic device 14 or application server 16 by a communication link 18. The communication link 18 may be a wired communication link (e.g., USB, Ethernet, Firewire, etc.) or a wireless communication link (e.g., Bluetooth, WiFi, infrared, etc.). The communication link 18 may be initiated by mobile device 12 and/or electronic device 14, application server 16, etc.

In system 10, synchronization actions involving the mobile device 12 can include client-server based communications between device 12 and application server 16 conducted over network 20. For example, application server 16 can be an e-mail server or Web server that exchanges digital content contained in server data store 22 with digital content contained in device data store 24. Synchronization actions between devices 12 and 16 can also be indirect data exchanges that utilize electronic device 14 as a communication intermediary. For example, mobile device 12 can be docked (connected via network 26) to electronic device 14, which is connected to application server 16 via network 20. When device 14 is used as a communication intermediary, data store 28 can be used to cache digital content exchanged between device 12 and server 16.

Synchronization actions involving mobile device 12 can also include peer-to-peer communications between mobile device 12 and computing device 14 conducted over network 26, where digital content is exchanged between device data stores 24 and 28. For example, mobile device 12 can be communicatively connected to computing device 14 via a Bluetooth connection, an infrared connection, or a Wi-Fi connection, defined herein as a wireless connection conforming to any of the 802.11 family of protocols. In another situation, mobile device 12 can behave as a peripheral device of computing device 14, where when peripherally connected to device 14, the mobile device 12 can function as a storage drive of device 14.

As used herein, data synchronization can include any data exchange between a data store 24 of the mobile device and a remotely located data store, such as data store 22 and/or 28. Data exchanges can be time delayed or real-time, can be unidirectional or bidirectional and can include any type of digital content. For example, synchronization actions of the mobile device 12 can include a conveyance of digital content, such as a conveyance of email messages, appointments, calendar information, electronic documents, photographs, video, music, and the like. Further, data exchanges can include real-time communications, such as VoIP communications, chat communications, audio or video streaming communications, real-time collaborative communications, interactive gaming communications, and the like.

It should be evident that performing a synchronization action can consume a resource of the mobile device 12. Resource consumption can be more significant when a resource is scarce, expensive, or difficult to renew. Mobile device 12 can include multiple different resources with overlapping capabilities. For example, a mobile device 12 can have multiple transceivers, such as a mobile telephony transceiver, a Wi-Fi transceiver, and a Bluetooth transceiver. Each of these transceivers can have different associated bandwidth characteristics, power consumption characteristics, and service fees. Synchronization context settings can alter synchronization details based upon these different transceiver characteristics and based upon which transceiver is to be involved in a data exchange.

As presented herein, data stores 22, 24, and 28, can be a physical or virtual storage space configured to store digital information. Data stores 22, 24 and 28 can be physically implemented within any type of hardware including, but not limited to, a magnetic disk, a hard drive, an optical disk, a semiconductor memory, a digitally encoded plastic memory, a holographic memory, or any other recording medium. Each of the data stores 22, 24 and 28 can be a stand-alone storage unit as well as a storage unit formed from a plurality of physical devices. Additionally, information can be stored within data store 22, 24 and 28 in a variety of manners. For example, information can be stored within one or more collections of information (e.g., a database structure) or can be stored within one or more files of a file storage system, where each file may or may not be indexed for information searching purposes. Further, data stores 22, 24, 28 can utilize one or more encryption mechanisms to protect stored information from unauthorized access.

Networks 20 and 26 can include any hardware/software/and firmware necessary to convey digital content encoded within carrier waves. Digital content can be contained within analog or digital signals and conveyed though data or voice channels. Networks 20 and 26 can include local components and data pathways necessary for communications to be exchanged among computing device components and between integrated device components and peripheral devices. Networks 20 and 26 can also include network equipment, such as routers, data lines, hubs, and intermediary servers which together form a data network, such as the Internet. Networks 20 and 26 can also include circuit-based communication components and mobile communication components, such as telephony switches, modems, cellular communication towers, and the like. Networks 20 and 26 can include line based and/or wireless communication pathways.

Figure 2 is schematic diagram of an electronic device 12 in an exemplary form of a mobile telephone. The general functionality associated with mobile telephone 12 will now be discussed. For purposes of brevity, only the components and functionality of mobile telephone 12 will be discussed.

The mobile telephone 12 is shown as having a "brick" or "block" form factor housing 50, but it will be appreciated that other type housings, such as a clamshell housing or a slide-type housing, may be utilized.

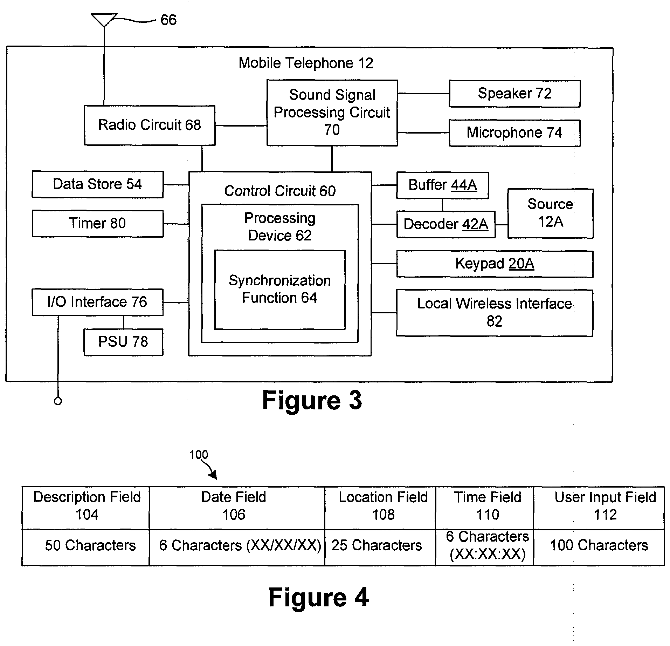

The mobile telephone 12 includes a display 52 (e.g., a liquid crystal display) for displaying information to a user. The display 52 may present information to a user such as operating state, time, telephone numbers, contact information, various navigational menus, etc., which enable the user to utilize the various features of the mobile telephone 12. The display 52 may also be used to visually display content received by the mobile telephone 12 and/or retrieved from a data store 54 (Figure 3) of the mobile telephone.

The mobile telephone 12 also includes keypad 56. The keypad 56 may provide for a variety of user input operations. For example, the keypad 56 may include alphanumeric keys for allowing entry of alphanumeric information such as telephone numbers, phone lists, contact information, notes, etc. In addition, the keypad 56 may include special function keys 58 such as a "call send" key for initiating or answering a call, and a "call end" key for ending or "hanging up" a call. Special function keys 58 may also include menu navigation keys, for example, for navigating through a menu displayed on the display 52. Other keys associated with the mobile telephone may include a volume key, an audio mute key, an on/off power key, a web browser launch key, a camera launch key, etc. Keys or key-like functionality may also be embodied as a touch screen associated with the display 52.

The mobile telephone 12 includes conventional call circuitry that enables the mobile telephone to establish a call and/or exchange signals with a called/calling device, typically another mobile telephone or landline telephone. However, the called/calling device need not be another telephone, but may be some other device such as an Internet web server, content providing server, etc. The call circuitry also may be responsible for transmitting text messages that are prepared by the user.

With reference to Figure 3, additional components of the mobile telephone 12 will be described. For the sake of brevity, generally conventional features of the mobile telephone 12 will not be described in great detail herein. The mobile telephone 12 includes a primary control circuit 60 that is configured to carry out overall control of the functions and operations of the mobile telephone 12. The control circuit 60 may include a processing device 62, such as a CPU, microcontroller or microprocessor. The processing device 62 executes code stored in a memory (not shown) within the control circuit 60 and/or in a separate memory, such as data store 54, in order to carry out operation of the mobile telephone 12. The data store 54 may be, for example, one or more of a buffer, a flash memory, a hard drive, a removable media, a volatile memory, a non-volatile memory or other suitable device. In addition, the processing device 62 executes code in order to perform a synchronization function 64 described below to synchronize information between one or more other electronic devices (e.g., electronic device 14 and/or application server 16).

It will be apparent to a person having ordinary skill in the art of computer programming, and specifically in applications programming for mobile telephones or other electronic devices, how to program a mobile telephone 12 to operate and carry out the functions described herein. Accordingly, details as to the specific programming code have been left out for the sake of brevity. Also, while the synchronization function is executed by the processing device 62 in accordance with the preferred embodiment of the invention, such functionality could also be carried out via dedicated hardware, firmware, software, or combinations thereof, without departing from the scope of the invention.

Continuing to refer to Figure 3, the mobile telephone includes an antenna 66 coupled to a radio circuit 68. The radio circuit 68 includes a radio frequency transmitter and receiver for transmitting and receiving signals via the antenna 66, as is conventional. The radio circuit 68 may be configured to operate in a mobile communications system. The radio circuit 68 may be further configured to receive data and/or audiovisual content. For example, the receiver may be an IP datacast compatible receiver compatible with a hybrid network structure providing mobile communications and digital broadcast services, such as DVB-H mobile television and/or mobile radio. Other receivers for interaction with a mobile radio network or broadcasting network are possible and include, for example, GSM, CDMA, WCDMA, MBMS, WiFi, WiMax, DVB-H, ISDB-T, etc.

The mobile telephone 12 further includes a sound signal processing circuit 70 for processing audio signals transmitted by/received from the radio circuit 68. Coupled to the sound processing circuit 70 are a speaker 72 and a microphone 74 that enable a user to listen and speak via the mobile telephone 12, as is conventional. The radio circuit 68 and sound processing circuit 70 are each coupled to the control circuit 60 so as to carry out overall operation. Audio data may be passed from the control circuit 60 to the sound signal processing circuit 70 for playback to the user. The audio data may include, for example, audio data from an audio file stored by the data store 54 and retrieved by the control circuit 60. The sound processing circuit 70 may include any appropriate buffers, decoders, amplifiers and so forth.

The mobile telephone 12 further includes one or more I/O interface(s) 76. The I/O interface(s) 76 may be in the form of typical mobile telephone I/O interfaces and may include one or more electrical connectors. As is typical, the I/O interface(s) 76 may be used to couple the mobile telephone 12 to a battery charger to charge a battery of a power supply unit (PSU) 78 within the mobile telephone. In addition, or in the alternative, the I/O interface(s) 76 may serve to connect the mobile telephone 12 to a wired personal hands-free adaptor (not shown), such as a headset (sometimes referred to as an earset) to audibly output sound signals output by the sound processing circuit 70 to the user. Further, the I/O interface(s) 76 may serve to connect the mobile telephone 12 to an electrical device (e.g., a personal computer 14, application server 16 or other device via a data cable). The mobile telephone 12 may receive operating power via the I/O interface(s) 76 when connected to a vehicle power adapter or an electricity outlet power adapter.

The mobile telephone 12 may also include a timer 80 for carrying out timing functions. Such functions may include timing the durations of calls, generating the content of time and date stamps. The timing functions may be triggered by hardware and/or software.

The mobile telephone 12 may also include a local wireless interface 82, such as an infrared transceiver and/or an RF adaptor (e.g., a Bluetooth adapter), for establishing communication with an accessory, a hands-free adaptor (e.g., a headset that may audibly output sounds corresponding to audio data transferred from the mobile telephone 12A to the adapter), another electronic device (e.g., electronic device 14, application server 16, etc.), mobile radio terminal, a computer or any another device capable of wireless communication.

The mobile telephone 12A may be configured to transmit, receive and process data, such as text messages (e.g., colloquially referred to by some as "an SMS"), electronic mail messages, multimedia messages (e.g., colloquially referred to by some as "an MMS"), image files, video files, audio files, ring tones, streaming audio, streaming video, data feeds (including podcasts) and so forth from the device in which it is connected. Processing such data may include storing the data in the data store 54, executing applications to allow user interaction with data, displaying video and/or image content associated with the data, outputting audio sounds associated with the data and so forth.

The mobile telephone 12 may be configured to operate as part of a communications system. The system may include a communications network having a server (or servers) for managing calls placed by and destined to the mobile telephone, transmitting data to the mobile telephone and carrying out any other support functions. The server generally communicates with the mobile telephone via a transmission medium. The transmission medium may be any appropriate device or assembly, including, for example, a communications tower, another mobile telephone, a wireless access point, a satellite, etc. Portions of the network may include wireless and/or wired transmission pathways. The network may support the communications activity of multiple mobile telephones.

The data store 54 (also referred to as data store 24) includes one or more collections of information 100 (e.g., databases, calendar information, contact information, e-mail messages, etc.) that may be synchronized with data stored in a remote store (e.g., stores 22, 28). The collections of information 100 may be related to one or more computer program applications 102 (e.g., Outlook, GroupWise, etc.). The applications 102 generally include a plurality of data fields 104, as shown in Figure 4.

For example, an electronic calendar application 102, which may be stored in data store 54 may allow a user to electronically set up appointments, meetings, conference calls, etc. The calendar application 102 includes a plurality of data fields 104-112. Such data fields may include a description field 104 for identifying a description of the event (e.g., meeting, conference call, appointment, etc.); a date field 106 for identifying the date of the event; a location field 108 for identifying a location associated with the event; a time field 110 for identifying the beginning time of the event and/or a duration of the event; and a user input field 112 for allowing a user to input information that does not have a particular data field. For example, the user input field may include notes, a telephone conference call-in number, telephone conference personal identification number, etc. Each of the data fields 104-112 generally has a fixed length field. For example, the description field 104 may be allow 50 characters to be entered, the date field 106 may allow a prescribed type of date entry (e.g., 00/00/00 for month/date/year); the location field 108 may be fixed to 25 characters; the time field 110 allow a prescribed type of time entry (e.g., 16:00:01, 01:00 AM, etc.); the user input field 112 may also have a fixed field size of 25 characters. One of ordinary skill in the art will readily appreciate that the data fields discussed above or exemplary in nature and not intended to limit the scope of the present invention.

It is common for many portable electronic devices to have fixed size data fields that are more limited in size than data fields on non-portable devices. One reason for this is the limited memory generally available on the portable electronic devices. Thus, while Microsoft Outlook being processed by a server application or a personal computer may allow description field to be 100 characters in size, a mobile version of Microsoft Outlook operating on a mobile phone, for example, may limit the description field to 50 characters. In such cases, when information from the devices are synchronized, information originating in the description field of the electronic device that exceeds the field size of the mobile device will be truncated (e.g., only the first 50 characters will be synchronized to the mobile device).

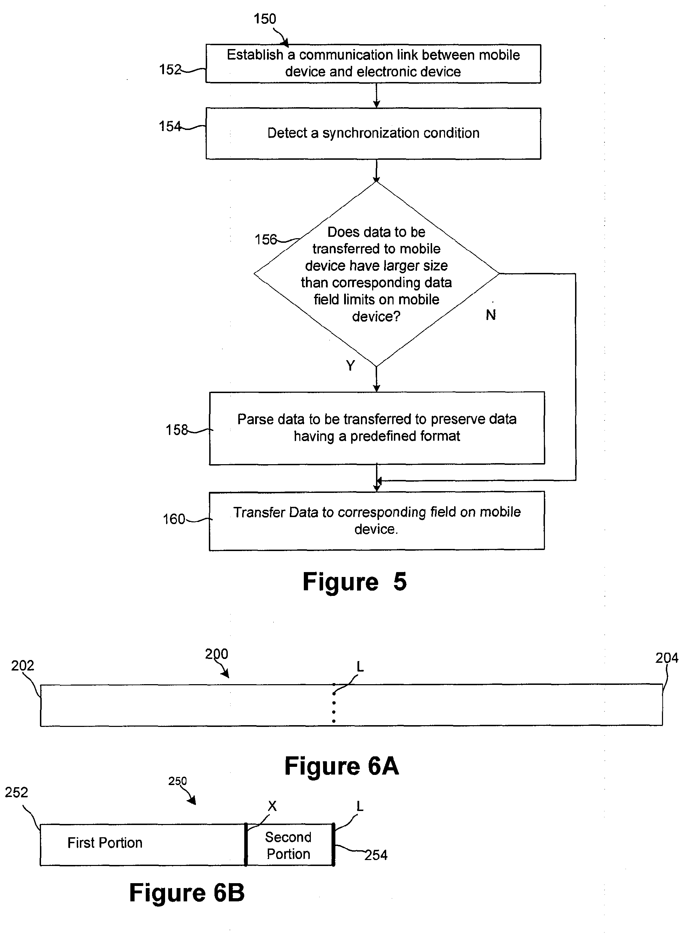

With additional reference to Figure 5, illustrated is a flow chart of logical blocks that make up certain features of the synchronization function 64. The flow chart may be thought of as depicting steps of a method. Although Figure 5 shows a specific order of executing functional logic blocks, the order of execution of the blocks may be changed relative to the order shown. Also, two or more blocks shown in succession may be executed concurrently or with partial concurrence. Certain blocks also may be omitted. In addition, any number of commands, state variables, semaphores or messages may be added to the logical flow for purposes of enhanced utility, accounting, performance, measurement, troubleshooting, and the like. It is understood that all such variations are within the scope of the present invention.

An exemplary method 150 for synchronizing information between electronic devices is illustrated in Figure 5. The exemplary method 150 is generally carried out by synchronization function 64.

At block 152, a communication link is established between a mobile device and an electronic device. As described above with respect to Figure 1, the communication link may be a direct communication link and/or indirect communication link. For example, the mobile device 12 may be directly coupled to the electronic device 14 and/or application server 16. Alternatively, the mobile device 12 may have one or more networks (e.g., networks 20, 26) coupled between the devices. The communication link may be wired, wireless or a combination of wired and wireless communication links. In addition, the communication link may be initiated by the mobile device 12 and/or the electronic device (e.g., electronic device 14, application server 16).

At block 154, a synchronization condition is detected by the mobile device 12, the network (e.g., networks 20, 26) and/or the electronic device (e.g., electronic device 14, application server 16). The synchronization condition may be any type signaling between the devices that data is to be transferred from an electronic device (e.g., electronic device 14, application server 16) to the mobile device or a transfer of data from the mobile device 12 to the electronic device. In general, the synchronization condition may be detected by one or more application programs available on both devices to be synchronized and may be implemented by synchronization function 64. For example, many electronic devices and mobile devices utilize ActiveSync, which is a data synchronization program developed by Microsoft for use with its Microsoft Windows line of operating systems.

ActiveSync allows a mobile device to be synchronized with either a desktop PC, or a server running appropriate software (e.g., Microsoft Exchange Server). Generally ActiveSync allows personal information data, such as E-mail, Calendar, Contacts and Tasks to be synchronized with the Exchange Server. ActiveSync also provides for the manual transfer of files to a mobile device, along with limited backup/restore functionality, and the ability to install and uninstall mobile device applications.

While the present application is described utilizing ActiveSync functionality, one of ordinary skill in the art will readily appreciate that other synchronization programs may be utilized in connection with the present invention. For example, Windows Mobile Device Center is an alternative synchronization program that may be utilized in connection with the present invention.

As discussed above, the data to be synchronized generally includes a plurality a data fields (e.g., data fields 102-112). At block 156, the data to be transferred is compared to a corresponding field on the mobile device. For example, the size of the data (in bytes or number of characters) is compared to a corresponding input field limit where the data will be stored on the mobile device. If the data to be transferred has a smaller size that the size of the corresponding input field (e.g., the maximum data size associated with the corresponding field), the data is transferred at block 160 and stored in data store. If the data has a larger size than the corresponding input field, the method proceeds to block 158.

At block 158, the one or more fields associated with the data to be transferred from the electronic device to the mobile device is parsed to preserve data having a predefined format. The step of parsing includes applying one or more rules to the data to be transferred from the electronic device to the mobile device. The one or more rules may correspond to a group consisting of at least one selected from the group of a telephone number, a key number, an identification number, a name, a location, an uninterrupted string of alphanumeric characters, an uninterrupted string of 5 or 6 alphanumeric characters, alphanumeric characters near an asterisk (*) symbol and/or a hash (#) symbol, or a time. The one or more rules may also be defined by the user so that the user may customize the parsing function to seek common formats associated with the user's place of employment, for example. The one or more rules may also differentiate the information sought based on "critical" information, "important" information, or some other type of categorization for rating the level of importance of the information.

For example, the parsing of the data to be transferred to the mobile device 12 may identify telephone numbers having one or more defined formats (e.g., XXX-XXXX, 1-XXX-XXX-XXXX, 1XXXXXXXXXX, etc.), a key number (e.g., XXXXX, XXXXXX), an identification number (XXX-XX-XXXX, XXXXX, XXXXXX) or any other desired information. Generally, it may be desirable to preserve any uninterrupted string of alphanumeric characters, an uninterrupted string of 5 or 6 alphanumeric characters, alphanumeric characters near an asterisk (*) symbol and/or a hash (#) symbol. Likewise, some information may be deemed critical (e.g., telephone numbers, key numbers, etc.) while other information may be deemed of less importance (e.g., location of conference call participants, identity of all conference call participants, etc.). Of course, the above examples are exemplary in nature and not intended to limit the scope of the present invention. Other rules may be provided based on the application and/or data being synchronized. In addition, the user may customize the parsing function as desired.

In addition to parsing information having a predefined format, it may be desirable to limit the amount of truncation of the data transferred between the electronic device and the mobile device. For example, if a particular data field has a limit of characters (L), the transferring device, server or network may reduce that limit further by a predefined number of characters (X) to "make room" for extra information that would otherwise be truncated and lost.

Referring to Figure 6A, an exemplary data item 200 to be transferred to the mobile device 12 is shown. The data element has a beginning portion 202 and end portion 204. The data element has a larger size than is permitted to be synchronized to the mobile device 12. The limit (L) shown in a dotted line in Figure 6A illustrates the data limit for the size of the data field to be transferred. This limit (L) may be imposed by the mobile device 12, network (e.g., networks 20, 26) and/or another electronic device (e.g., electronic device 14, application server 16, etc.). The data arranged between the beginning portion 202 of the data element 200 to the limit (L) may be transferred to the mobile device 12 without data loss. Data arranged between the limit (L) and end portion 204 of the data element would normally be truncated and lost.

Referring to Figure 6B, an exemplary data element 250 is illustrated. The data element 250 may be viewed as a container for receiving portions of the data element 200 during a transfer from the electronic device to the mobile device 12. Like data element 200, the data element 250 has a beginning portion 252 and an end portion 254. The end portion corresponds to the limit (L) identified in Figure 6A.

In one embodiment, the first predefined number of characters (or bytes) (X) of the modified data element 250 are guaranteed to be unchanged by the parsing function discussed above. This is illustrated in Figure 6B by the line referenced by (X). From the beginning portion 252 to the predefined number of characters (X), these characters may not be altered. From the predefined number of characters (X) to the end of the data element 254, the data may be reformatted to parse one or more of the portions of the data from the data element 200, which is deemed to be critical and/or important information. As such, the first portion of the data element 250 is dynamically allocated based on the amount of critical and/or important data contained in the original data element 200, as determined by the parsing function. That is, the more critical and/or important data, the smaller the size of the first portion. As explained above, the parsing function may be implemented in the synchronization function 64, by the associated networks and/or enabled by the electronic device transferring the data to the mobile device.

The remaining characters, e.g., characters arranged between the X and L in Figure 6B might be discarded and replaced by information extracted from the rest of the original data element 200. As explained above, such information may be any strings of characters starting beyond X that are deemed critical and/or important according to the one or more rules discussed above. The truncation level (X) may be set by the user, set by default, set to a predetermined number (e.g., 10%, 25%, etc.), or set dynamically based on the amount of critical/important information found in the data to be transferred to the mobile device, as determined by the one or more rules.

The below algorithm in pseudo-code illustrates dynamic allocation of the data element 250. In this case, the threshold "X" can be moved beyond 10% if there is a lot of "important" information to be transferred, which would otherwise be truncated, but it cannot exceed a predefined or user set upper limit of the percentage of the size of the data element 250. For example, the maximum of size of "important" information may be limited to 25% of the total size of the data element 250. One of ordinary skill in the art will readily appreciate that the 25% number is exemplary in nature and such a threshold number may vary widely and may also be set by the user.

The portion of data element 250 between the "X" and "L" points to where the excess critical and/or important data is stored. The "X" starts at "L" and moves backwards until it reaches an upper limit (e.g., 25% of L) or is able to include all important and critical data. Once the amount of critical and important data reaches 10% of L, important information starts to be discarded in favor of keeping more critical data.

The following algorithm illustrates an exemplary manner of allocating storage space in the data element 250:

```
      step = 5 characters;
      maxbuffersize = L* 25% {Buffer size is 25% of L}
      threshold1 = L*10% {Threshold is 10% of L}
      X = L {X = data length limit}
      
      ParsingLoop:
      For charlndex = X to EndDataField
             {parse backwards to find delimiter and get the resulting data
             string}
      
             if the string is "critical", add it to Buffer1 (the "critical" data
             buffer);
             Limit Buffer1 to maxbuffersize characters
      
             if the string is "important", add it to Buffer2 (the "important but
             not critical" buffer)
      Next charlndex
      
      If (length(Buffer1) > (L-X)) OR
         (((L-X) < threshold1) AND (length(Buffer1)+length(Buffer2) > (L-X))) Then
        /* Increase the allowed area in small steps, with an upper limit of 25% */
             IF X < L - 25% Then Exit
        X = X - step
        Goto ParsingLoop (repeat until either all the critical data fits, or we reach
        the 25% upper limit)
      Exit: /*At this point, the area L-X is enough to hold all the critical data or it has
      reached the 25% limit */
      
       Copy the first X characters to the output field
      
       Add the contents of Buffer1
       Add the contents of Buffer2 until L total characters are reached
```

One of ordinary skill in the art will readily appreciate that the above pseudo-code is exemplary in nature and not intended to limit the scope of the present invention. The above pseudo-code is not intended to be exhaustive of all situations that may be encountered by the parsing function. For example, the above code does not illustrate how to handle strings of important characters that start before X but spill over beyond X. In one embodiment, those characters may be retained and X would be shifted to start after that string, for example. Thus, size X is adjustable based on the number of critical/important information determined in the data element to be transferred (e.g., data element 200).

Computer program elements of the invention may be embodied in hardware and/or in software (including firmware, resident software, micro-code, etc.). The invention may take the form of a computer program product, which can be embodied by a computer-usable or computer-readable storage medium having computer-usable or computer-readable program instructions, "code" or a "computer program" embodied in the medium for use by or in connection with the instruction execution system. In the context of this document, a computer-usable or computer-readable medium may be any medium that can contain, store, communicate, propagate, or transport the program for use by or in connection with the instruction execution system, apparatus, or device. The computer-usable or computer-readable medium may be, for example but not limited to, an electronic, magnetic, optical, electromagnetic, infrared, or semiconductor system, apparatus, device, or propagation medium such as the Internet. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner. The computer program product and any software and hardware described herein form the various means for carrying out the functions of the invention in the example embodiments.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means". It should also be noted that although the specification lists method steps occurring in a particular order, these steps may be executed in any order, or at the same time.

## Claims

1. A method for synchronizing information between a mobile device and an electronic device, the method comprising:
establishing (152) a communication link between a mobile device (12) and an electronic device (14);
detecting (154) a synchronization condition by the mobile device, wherein the synchronization condition is a transfer of data from the electronic device to the mobile device and the data includes a plurality of fields;
comparing (156) the data to be transferred to a corresponding field on the mobile device; and
parsing (158) the one or more fields associated with the data to be transferred from the electronic device to the mobile device if data from at least one of the fields exceeds a corresponding maximum data size field associated with the mobile device, wherein the data is parsed to preserve data having a predefined format based on a level of importance of the information, and
wherein the step of parsing includes transferring a first portion of the data to be transferred based upon location of the data in the data to be transferred and transferring a second portion of the data based on the data in the data to be transferred that corresponds to the predefined format.

2. The method of claim 1, wherein step of parsing includes applying one or more rules to the data to be transferred from the electronic device to the mobile device.

3. The method of claim 2, wherein the one or more rules correspond to a group consisting of at least one selected from the group of a telephone number, a key number, an identification number, a name, a location, or a time.

4. The method of claim 3, wherein the rules correspond to a predefined number format.

5. The method of claim 4, wherein one or more of the rules are defined by the user.

6. The method of claim 3, wherein the second portion of the data transferred is limited to a percentage of the corresponding maximum data size of field.

7. The method of any of claims 1-6, wherein a size of the first portion of the data is dynamically allocated based on the data to be transferred that corresponds to the predefined format.

8. The method of any one of claims 1-7, wherein the electronic device determines the synchronization condition upon establishing the communication link.

9. A mobile device (12) comprising:
a memory (54) for storing data received from an electronic device (14), wherein the data includes one or more data fields having a limited size;
a processor (60) coupled to the memory wherein when the mobile device is communicatively coupled to the electronic device, the processor is configured to:
detect a synchronization condition by the mobile device, wherein the synchronization condition is a transfer of data having a plurality of fields from the electronic device to the mobile device;
comparing the data to be transferred from the electronic device to the mobile device to a corresponding data field stored in the memory of the mobile device; and
parsing the one or more fields associated with the data to be transferred from the electronic device to the mobile device if data from at least one of the fields exceeds the corresponding limited size data field associated with the mobile device, wherein the data is parsed to preserve data having a predefined format based on a level of importance of the information, and
wherein the step of parsing includes storing in the memory a first portion of the data to be transferred based upon location of the data in the data to be transferred and transferring a second portion of the data based on the data in the data to be transferred that corresponds to the predefined format.

10. The device of claim 9, wherein the mobile device is a mobile telephone.

11. The device of any one of claims 9-10, wherein the processor parses the one or more fields by applying one or more rules to the data to be transferred from the electronic device to the mobile device.

12. The device of any one of claims 9-11, wherein the one or more rules correspond to a group consisting of at least one selected from the group of a telephone number, a key number, an identification number, a name, a location, or a time.

13. The device of any one of claims 9-12, wherein the rules correspond to a predefined number format.

## Patentansprüche

1. Verfahren zum Synchronisieren von Informationen zwischen einem Mobilgerät und einer elektronischen Vorrichtung, wobei das Verfahren umfasst:
Herstellen (152) einer Kommunikationsverbindung zwischen einem Mobilgerät (12) und einer elektronischen Vorrichtung (14);
Detektieren (154) einer Synchronisierungsbedingung durch das Mobilgerät, wobei die Synchronisierungsbedingung eine Übertragung von Daten von der elektronischen Vorrichtung an das Mobilgerät ist, und die Daten eine Mehrzahl von Feldern umfasst;
Vergleichen (156) der zu übertragenden Daten auf ein entsprechendes Feld auf dem Mobilgerät; und
Parsen (158) des einen Feldes oder der mehreren Felder, die mit den von der elektronischen Vorrichtung an das Mobilgerät zu übertragenden Daten verknüpft sind, wenn Daten von mindestens einem der Felder ein entsprechendes Feld mit einer Maximaldatengröße, das mit dem Mobilgerät verknüpft ist, überschreiten, wobei die Daten geparst werden, um Daten mit einem vordefinierten Format zu sichern, die auf einem Stellenwert der Informationen basieren, und
wobei der Schritt des Parsens Übertragen eines ersten Teils der zu übertragenden Daten auf der Basis des Standorts der Daten in den zu übertragenden Daten und Übertragen eines zweiten Teils der Daten basierend auf den Daten in den zu übertragenden Daten, die dem vordefinierten Format entsprechen, umfasst.

2. Verfahren nach Anspruch 1, wobei der Schritt des Parsens Anwenden von einer oder mehreren Regeln auf den von der elektronischen Vorrichtung an das Mobilgerät zu übertragenden Daten umfasst.

3. Verfahren nach Anspruch 2, wobei die eine oder die mehreren Regeln einer Gruppe entspricht bzw. entsprechen, die aus mindestens einem ausgewählt aus der Gruppe von einer Telefonnummer, einer Schlüsselnummer, einer Identifikationsnummer, einem Namen, einem Standort, oder einer Zeit besteht.

4. Verfahren nach Anspruch 3, wobei die Regeln einem vordefinierten Zahlenformat entsprechen.

5. Verfahren nach Anspruch 4, wobei eine oder mehrere der Regeln durch den Benutzer definiert wird bzw. werden.

6. Verfahren nach Anspruch 3, wobei der zweite Teil der übertragenen Daten auf einen Prozentanteil der entsprechenden Maximumdatengröße des Feldes beschränkt wird.

7. Verfahren nach einem der Ansprüche 1-6, wobei eine Größe des ersten Teils der Daten basierend auf den zu übertragenden Daten, die dem vordefinierten Format entsprechen, dynamisch zur Verfügung gestellt wird.

8. Verfahren nach einem der Ansprüche 1-7, wobei die elektronische Vorrichtung die Synchronisierungsbedingung nach dem Herstellen der Kommunikationsverbindung bestimmt.

9. Mobilgerät (12) umfassend:
einen Speicher (54) zum Speichern von Daten, die von einer elektronischen Vorrichtung (14) empfangen werden, wobei die Daten ein oder mehrere Datenfelder mit einer begrenzten Größe umfassen;
einen Prozessor (60), der an den Speicher gekoppelt ist, wobei, wenn das Mobilgerät an die elektronische Vorrichtung gekoppelt ist, wobei der Prozessor zum Folgenden ausgelegt ist:
Detektieren einer Synchronisierungsbedingung durch das Mobilgerät, wobei die Synchronisierungsbedingung eine Übertragung von Daten, die eine Mehrzahl von Feldern aufweisen, von der elektronischen Vorrichtung an das Mobilgerät ist;
Vergleichen der von der elektronischen Vorrichtung an das Mobilgerät zu übertragenden Daten mit einem entsprechenden Datenfeld, das in dem Speicher des Mobilgeräts gespeichert ist; und
Parsen des einen Feldes oder der mehreren Felder, die mit den von der elektronischen Vorrichtung an das Mobilgerät zu übertragenden Daten verknüpft sind, wenn Daten von mindestens einem der Felder das mit dem Mobilgerät verknüpfte entsprechende Feld mit einer begrenzten Datengröße überschreiten, wobei die Daten geparst werden, um Daten mit einem vordefinierten Format basierend auf einem Stellenwert der Informationen zu sichern, und
wobei der Schritt des Parsens Speichern eines ersten Teils der zu übertragenden Daten basierend auf dem Standort der Daten in den zu übertragenden Daten in dem Speicher und Übertragen eines zweiten Teils der Daten basierend auf den Daten in den zu übertragenden Daten, die dem vordefinierten Format entsprechen, umfasst.

10. Vorrichtung nach Anspruch 9, wobei das Mobilgerät ein Mobiltelefon ist.

11. Vorrichtung nach einem der Ansprüche 9-10, wobei der Prozessor das eine oder die mehreren Felder durch Anwenden von einer oder mehreren Regeln auf den von der elektronischen Vorrichtung an das Mobilgerät zu übertragenden Daten parst.

12. Vorrichtung nach einem der Ansprüche 9-11, wobei die eine oder die mehreren Regeln einer Gruppe entspricht bzw. entsprechen, die aus mindestens einem ausgewählt aus der Gruppe von einer Telefonnummer, einer Schlüsselnummer, einer Identifikationsnummer, einem Namen, einem Standort, oder einer Zeit besteht.

13. Vorrichtung nach einem der Ansprüche 9-12, wobei die Regeln einem vordefinierten Zahlenformat entsprechen.

## Revendications

1. Procédé pour synchroniser des informations entre un dispositif mobile et un dispositif électronique, le procédé comprenant :
l'établissement (152) d'une liaison de communication entre un dispositif mobile (12) et un dispositif électronique (14) ;
la détection (154) d'une condition de synchronisation par le dispositif mobile, dans lequel la condition de synchronisation est un transfert de données du dispositif électronique au dispositif mobile et les données comprennent une pluralité de champs ;
la comparaison (156) des données à transférer à un champ correspondant sur le dispositif mobile ; et
l'analyse (158) des un ou plusieurs champs associés aux données à transférer du dispositif électronique au dispositif mobile si des données d'au moins un des champs dépassent un champ de taille de données maximum correspondant associé au dispositif mobile, dans lequel les données sont analysées pour conserver des données ayant un format prédéfini sur la base d'un niveau d'importance des informations, et
dans lequel l'étape d'analyse comprend le transfert d'une première portion des données à transférer sur la base d'un emplacement des données dans les données à transférer et le transfert d'une deuxième portion des données sur la base des données dans les données à transférer qui correspondent au format prédéfini.

2. Procédé selon la revendication 1, dans lequel l'étape d'analyse comprend l'application d'une ou plusieurs règles aux données à transférer du dispositif électronique au dispositif mobile.

3. Procédé selon la revendication 2, dans lequel les une ou plusieurs règles correspondent à un groupe constitué d'au moins une sélectionnée dans le groupe comprenant un numéro de téléphone, un numéro de clé, un numéro d'identification, un nom, un lieu, ou une heure.

4. Procédé selon la revendication 3, dans lequel les règles correspondent à un format de nombre prédéfini.

5. Procédé selon la revendication 4, dans lequel une ou plusieurs des règles sont définies par l'utilisateur.

6. Procédé selon la revendication 3, dans lequel la deuxième portion des données transférées est limitée à un pourcentage de la taille de données maximum correspondante du champ.

7. Procédé selon l'une quelconque des revendications 1-6, dans lequel une taille de la première portion des données est attribuée dynamiquement sur la base des données à transférer qui correspondent au format prédéfini.

8. Procédé selon l'une quelconque des revendications 1-7, dans lequel le dispositif électronique détermine la condition de synchronisation à l'établissement de la liaison de communication.

9. Dispositif mobile (12) comprenant :
une mémoire (54) pour le stockage de données reçues d'un dispositif électronique (14), dans lequel les données comprennent un ou plusieurs champs de données ayant une taille limitée ;
un processeur (60) couplé à la mémoire dans lequel lorsque le dispositif mobile est couplé en communication au dispositif électronique, le processeur est configuré pour :
détecter une condition de synchronisation par le dispositif mobile, dans lequel la condition de synchronisation est un transfert de données ayant une pluralité de champs du dispositif électronique au dispositif mobile ;
comparer les données à transférer du dispositif électronique au dispositif mobile à un champ de données correspondant stocké dans la mémoire du dispositif mobile ; et
analyser les un ou plusieurs champs associés aux données à transférer du dispositif électronique au dispositif mobile si des données d'au moins un des champs dépassent le champ de données de taille limitée correspondant associé au dispositif mobile, dans lequel les données sont analysées pour conserver des données ayant un format prédéfini sur la base d'un niveau d'importance des informations, et
dans lequel l'étape d'analyse comprend le stockage dans la mémoire d'une première portion des données à transférer sur la base d'un emplacement des données dans les données à transférer et le transfert d'une deuxième portion des données sur la base des données dans les données à transférer qui correspondent au format prédéfini.

10. Dispositif selon la revendication 9, dans lequel le dispositif mobile est un téléphone mobile.

11. Dispositif selon l'une quelconque des revendications 9-10, dans lequel le processeur analyse les un ou plusieurs champs par application d'une ou plusieurs règles aux données à transférer du dispositif électronique au dispositif mobile.

12. Dispositif selon l'une quelconque des revendications 9-11, dans lequel les une ou plusieurs règles correspondent à un groupe constitué d'au moins une sélectionnée dans le groupe comprenant un numéro de téléphone, un numéro de clé, un numéro d'identification, un nom, un lieu, ou une heure.

13. Dispositif selon l'une quelconque des revendications 9-12, dans lequel les règles correspondent à un format de nombre prédéfini.
